# EUROPEAN PATENT SPECIFICATION

(11) **EP 2 302 716 B1**
(45) Date of publication and mention of the grant of the patent: **02.05.2018**
(21) Application number: 10174515.6
(22) Date of filing: 30.08.2010
(51) Int. Cl.: B62K 19/46, H01M 2/10

(54) **Peripheral structure of battery for saddle-ride type vehicle**
Peripheriestuktur einer Batterie für ein Fahrzeug mit einem Sattel
Structure périphérique de batterie pour véhicule comprenant une selle

(30) Priority: 28.09.2009 JP 2009221844
(43) Date of publication of application: 30.03.2011
(73) Proprietor: Honda Motor Co., Ltd., Tokyo 107-8556 (JP)
(72) Inventor: Yoshimura, Yuki, Saitama 351-0193 (JP); Fujita, Katsumasa, Chiyodaku Tokyo 101-0052 (JP)
(74) Representative: Weickmann & Weickmann PartmbB

(56) References cited:
- FR-A1- 2 722 755
- FR-A1- 2 738 539
- JP-A- 9 118 138
- US-A- 4 444 856

## Description

### Technical Field

The present invention relates to a peripheral structure of a battery for saddle-ride type vehicle, the structure involving a periphery of a battery to be mounted on a vehicle such as a saddle-ride type vehicle.

### Background Art

Heretofore, a structure is known in which a lid member is provided to a battery installed in a motorcycle, and is used to cover upper portions of a positive side terminal and a negative side terminal of the battery (see Japanese Patent Document No. JP 2008-21445 A, for example).

A peripheral structure of a battery for a saddle-ride type vehicle according to the preamble of claim 1 is known from FR 2 738 539 A1.

### Problems to be Solved by the Invention

Meanwhile, in the structure according to Japanese Patent Document No. JP 2008-21445 A, the lid member is devised so that a positive terminal would be detached after a negative terminal is detached in the maintenance of the battery. However, the structure does not take into account a case where other wires are connected to the battery (such as when a booster cable for charging is connected or when a tester is connected).

The present invention has been made in view of the aforementioned circumstances. An object of the present invention is to provide a peripheral structure of a battery for saddle-ride type vehicle which enhances maintenance capabilities while taking into account a case where other wires are connected to a battery, and also takes into account vibration due to the drive and the like.

### Means for Solving the Problems

As means for solving the problems, a first aspect of the present invention provides a peripheral structure of a battery for saddle-ride type vehicle including: a battery (30) for supplying power to electrical components of a vehicle (1); and a battery holder (29) for housing the battery (30). Here, a lid member (34) is provided to the battery holder (29) to be openable and closable, the lid member (34) fixedly holding the battery (30) in cooperation with the battery holder (29), openings (46, 47) are formed in the lid member (34) at positions facing a positive side terminal (31) and a negative side terminal (32) of the battery (30), respectively, and each of the openings (46, 47) includes an inward extending portion (46A, 47A) extending from the opening (46, 47) in a vehicle width direction toward a center of a vehicle body, thus forming opening regions each relatively wide in the vehicle width directions.

According to a second aspect of the present invention, the battery (30) is arranged between paired left and right rear frames (14L, 14R), and the positive side terminal (31) and the negative side terminal (32) are directed toward a rear of the vehicle (1).

According to a third aspect of the present invention, guard members (25L, 25R) which cover lateral sides of the positive side terminal (31) and the negative side terminal (32) are provided at an inner side of the paired left and right rear frames (14L, 14R), and the guard members (25L, 25R) are set to extend to a height not lower than that of top surfaces of the rear frames (14L, 14R).

According to a fourth aspect of the present invention, the guard members (25L, 25R) are formed integrally with a rear fender (23).

According to a fifth aspect of the present invention, a partition (55) extending in a vehicle width direction is formed integrally in the rear fender (23), and a space defined by the partition (55) is secured as a housing space.

According to a sixth aspect of the present invention, the battery holder (29) is provided in the rear fender (23), and the lid member (34) is fastened to the rear fender (23) with a fastening member (53).

According to a seventh aspect of the present invention, the lid member (34) is formed of a front half portion (40) located on a front side of the vehicle (1) and a rear half portion (42) located on a rear side of the vehicle (1), the front half portion (40) is fixed to the battery holder (29), the rear half portion (42) is made openable and closable by means of a hinge (41), and the openings (46, 47) are provided in the rear half portion (42).

According to an eighth aspect of the present invention, recesses (43, 44, 48, 49) are provided in a top surface of the lid member (34), and bottom portions of the recesses (43, 44, 48, 49) abut on the battery (30).

According to a ninth aspect of the present invention, an elastic member (60) is provided to the rear half portion (42).

According to a tenth aspect of the present invention, a fuse box (45) for housing a fuse is provided to the lid member (34).

### Effects of the Invention

According to the first aspect of the present invention, the openings are provided to the lid member at positions facing the positive side terminal and negative side terminal of the battery, respectively. This allows wires (a booster cable for charging the battery from the outside, a tester, and the like) to be connected to the terminals without the opening of the lid member, thereby enhancing maintenance capabilities. Further, each of the openings includes the inward extending portion extending in a direction toward a center of a vehicle body and thus has an inwardly enlarged opening area. This prevents the lid member and a clip of a booster cable from interfering with each other in the connection of the clip from the lateral side, thereby facilitating the connection of the clip from the lateral side. Further, the battery can be fixedly held in a stable manner by the battery holder and the lid member, which covers the battery so as not to expose the battery to the outside, without the provision of a dedicated holding band and the like. This reduces the number of components and thus enhances productivity.

According to the second aspect of the present invention, the battery is arranged between the paired left and right rear frames, and the positive side terminal and the negative side terminal are directed rearward. This allows wires to be connected to the positive side terminal and the negative side terminal while the wires extend rearward, and thus prevents the connected wires and frames of a vehicle body from interfering with each other.

According to the third aspect of the present invention, it is possible to more reliably prevent the interference between wires and the frames of the vehicle body caused when the wires are connected to the positive side terminal and the negative side terminal.

According to the fourth aspect of the present invention, the guard members are formed integrally with the rear fender. This eliminates the need for additionally providing a member for constituting the guard members, thereby reducing cost.

According to the fifth aspect of the present invention, the housing space formed by the partition can be used for placing therein a tool box or component box. The formation of the partition integrally with the rear fender eliminates the need for additionally providing a member for placing therein a tool box or component box, thereby reducing cost. Moreover, the formation allows making effective use of the rear fender, which is effective in a small-sized vehicle in which places to attach various components are limited.

According to the sixth aspect of the present invention, the battery holder and a portion for fastening the lid member are provided to the rear fender. This eliminates the need for additionally preparing members for providing the battery holder and a portion for fastening the lid member, thereby reducing cost.

According to the seventh aspect of the present invention, the battery can be detached by opening the rear half portion of the lid member only, and without opening the entire lid member. This facilitates maintenance work such as replacement of the battery, thereby enhancing maintenance capabilities.

According to the eighth aspect of the present invention, vibration of the battery in the vehicle vertical direction due to the drive and the like can be suppressed.

According to the ninth aspect of the present invention, vibration of the battery in the vehicle longitudinal direction due to the drive and the like can be suppressed.

According to the tenth aspect of the present invention, a fuse can be placed adjacent to the battery. This allows, in a case where a large current not less than a rated current flows from the battery, quickly breaking the large current to protect an electrical circuit. Moreover, the provision of the fuse box to the lid member eliminates the need for additionally providing a place to attach the fuse box, which is effective in a small-sized vehicle in which places to attach various components are limited.

### Brief Description of Drawings

Fig. 1 is a side view of a motorcycle according to an embodiment of the present invention.
Fig. 2 is a perspective view of a periphery of rear frames located in a rear portion of the motorcycle.
Fig. 3 is a side view of the periphery of the rear frames located in the rear portion of the motorcycle.
Fig. 4 is a top view of the periphery of the rear frames located in the rear portion of the motorcycle.
Fig. 5 is a cross-sectional view taken along the line A-A of Fig. 4.
Fig. 6 is a cross-sectional view taken along the line B-B of Fig. 4.
Fig. 7 is a cross-sectional view taken along the line C-C of Fig. 4.
Fig. 8 is a front view of a rear fender of the motorcycle.
Fig. 9 is a view showing how booster cables are connected to electrode terminals of a battery.
Fig. 10 is a view showing how the booster cables are connected to the electrode terminals of the battery.

### Modes for Carrying Out the Invention

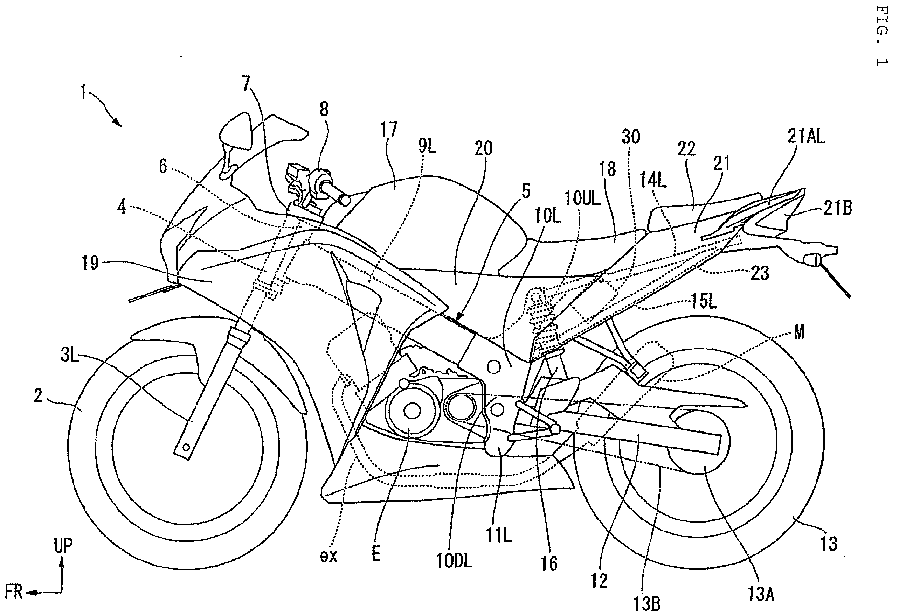

Hereinbelow, an embodiment of the present invention is described on the basis of the drawings. First of all, a motorcycle 1 is described by use of Fig. 1 as an example of a vehicle to which the present invention is applied. Note that, in the drawings used for the following description, an arrow FR indicates the front of the vehicle, an arrow UP indicates the upside of the vehicle, and an arrow LH indicates the left side of the vehicle. In the following description, these directions are used as appropriate.

As shown in Fig. 1, a front wheel 2 of the motorcycle 1 is axially supported by paired left and right front forks 3L and 3R (of which only 3L at the front side of the sheet is shown) at their lower end portions. The front forks 3L and 3R are pivotally supported, at their upper portions, to be steerable by a head pipe 6 with a steering stem 4 interposed therebetween, the head pipe 6 arranged at the front end of a vehicle body frame 5. A handlebar 8 is installed on a top bridge 7 of the steering stem 4.

The head pipe 6 is connected to paired left and right main frames 9L and 9R (of which only 9L at the front side of the sheet is shown) extending rearward and downward. The main frames 9L and 9R are respectively connected, at their rear ends, to center frames 10L and 10R (of which only 10L at the front side of the sheet is shown) extending vertically. Lower arm portions 10DL and 10DR (of which only 10DL at the front side of the sheet is shown) respectively constituting lower portions of the center frames 10L and 10R include pivot plates 11L and 11R (of which only 11L at the front side of the sheet is shown), respectively. A swing arm 12 is pivotally supported by the pivot plates 11L and 11R in such a way that its front end portions are vertically swingable. A rear wheel 13 is axially supported by the swing arm 12 at its rear end portions.

Upper arm portions 10UL and 10UR (of which only 10UL at the front side of the sheet is shown) respectively constituting upper portions of the center frames 10L and 10R are connected, at their upper portions, to paired left and right rear frames 14L and 14R (of which only 14L at the front side of the sheet is shown) which extend rearward and upward and join together at their rear ends. The rear frames 14L and 14R are connected, at their rear portions, to rear sub-frames 15L and 15R (of which only 15L at the front side of the sheet is shown) at their rear ends. The rear sub-frames 15L and 15R extend rearward and upward from approximate center regions, in a vertical direction, of the center frames 10L and 10R respectively, more specifically, from lower portions of the upper arm portions 10UL and 10UR respectively. Note that, the vehicle body frame 5 is formed of the head pipe 6, the main frames 9L and 9R, the center frames 10L and 10R, the rear frames 14L and 14R, and the rear sub-frames 15L and 15R.

An engine E is installed below the main frames 9L and 9R to be suspended therefrom. The engine E is located between the paired left and right main frames 9L and 9R and the center frames 10L and 10R. An exhaust pipe ex is connected to a cylinder block of the engine E at its front surface. The exhaust pipe ex extends to a rear portion of the vehicle, and a muffler M extending rearward and upward is attached to the exhaust pipe ex at its rear end. The rotational energy from the engine E is designed to be transmitted, through a chain 13B, to a driven sprocket 13A attached to the rear wheel 13. In addition, a fuel tank 17 is supported above the main frames 9L and 9R. A front seat 18 for a rider to be seated is supported above the rear frames 14L and 14R located behind the fuel tank 17. Further, a rear cushion 16 is set between the swing arm 12 and the rear frames 14L and 14R.

As to the exterior of the vehicle, the vehicle is covered by a front cowl 19 from front side portions to the front thereof. The front cowl 19 is supported by the main frames 9L and 9R and the like at appropriate portions. In addition, a side cowl 20 is supported below the fuel tank 17 and the front seat 18, and a rear cowl 21 is supported behind the side cowl 20. The rear cowl 21 covers lateral sides of the rear frames 14L and 14R and the rear sub-frames 15L and 15R. The rear cowl 21 is supported by the rear frames 14L and 14R and the rear sub-frames 15L and 15R at appropriate portions. A rear seat 22 for a passenger to be seated is installed on a top portion of the rear cowl 21. Further, paired left and right grips 21AL and 21AR (of which only 21AL at the front side of the sheet is shown) to be held by the passenger and a tail light 21B are installed on the rear cowl 21 at its rear portion. Furthermore, a rear fender 23 for covering the rear wheel 13 from above is installed at an inner side of the rear cowl 21, between the rear frames 14L and 14R and between the rear sub-frames 15L and 15R.

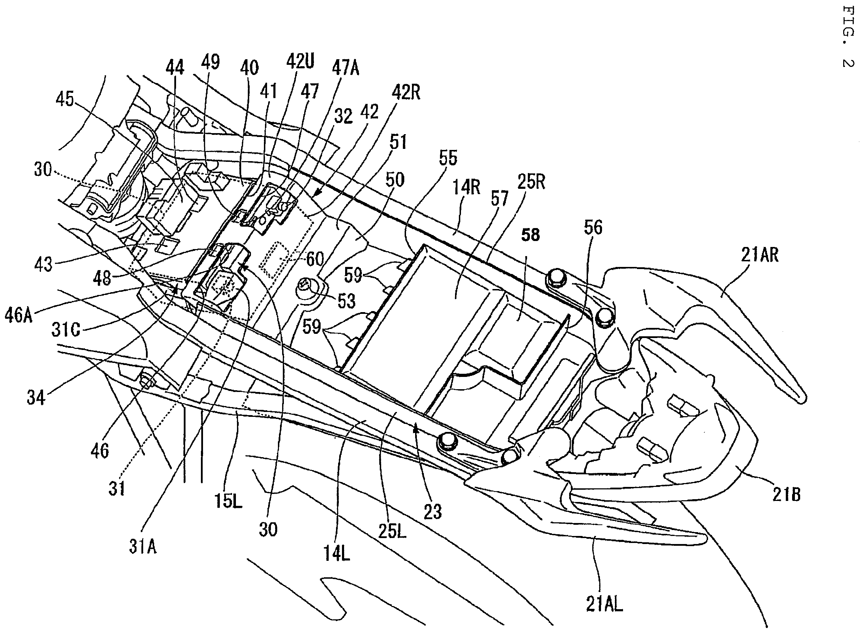

Now refer to Figs. 2 to 4. Figs. 2 to 4 each show how the periphery of the rear frames 14L and 14R look with the rear cowl 21, the front seat 18, and the like being detached and the rear fender 23 being exposed. In this embodiment, a battery 30 is arranged on the rear fender 23 as referred to in Figs. 2 to 4. Hereinbelow, a description is given of a structure for housing the battery 30 and a peripheral structure of the battery 30.

To begin with, the rear fender 23 is made by shaping a resin material. As shown in Figs. 2 to 4, the rear fender 23 is installed while being slightly inclined rearward and upward along a front portion to a rear portion of each of the rear frames 14L and 14R and the rear sub-frames 15L and 15R. The rear fender 23 thus covers substantially all of a region surrounded by the rear frames 14L and 14R and the rear sub-frames 15L and 15R.

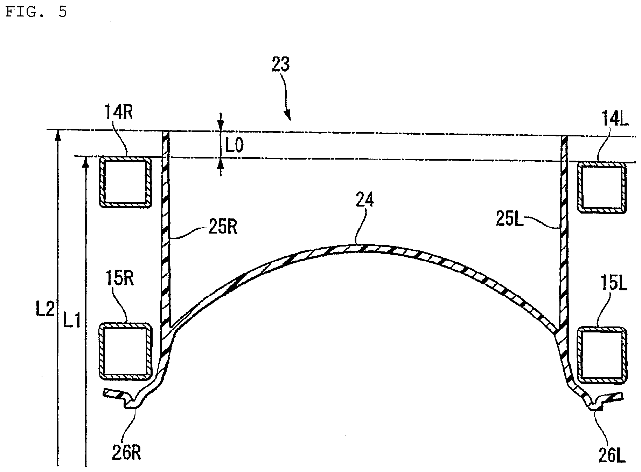

Fig. 5 shows a vertical cross-section of the rear fender 23. As shown in Fig. 5, the rear fender 23 includes a bottom portion 24 which has a curved shape when viewed from the front. Sidewall portions 25L and 25R extending upward are formed integrally at two end portions of the bottom portion 24.

The bottom portion 24 extends between the rear frames 14L and 14R and between the rear sub-frames 15L and 15R. The sidewall portions 25L and 25R extend upward at an inner side of the rear sub-frames 15L and 15R and of the rear frames 14L and 14R. A height dimension of the sidewall portions 25L and 25R is set so that the sidewall portions 25L and 25R can extend to a height not lower than that of the top surfaces of the rear frames 14L and 14R. Specifically, in Fig. 5, when "L1" indicates a distance from the ground to the top surface of each of the rear frames 14L and 14R, "L2" indicates a distance from the ground to an upper end portion of each of the sidewall portions 25L and 25R, and when "L0" indicates a difference between "L2" and "L1," a relationship "L2-L1>0," i.e., "L0>0" is satisfied between L1 and L2. Moreover, lower guard portions 26L and 26R extending outward in a vehicle width direction are formed at lower portions of the sidewall portions 25L and 26R, respectively, in such a way as to respectively cover lower portions of the rear sub-frames 15L and 15R.

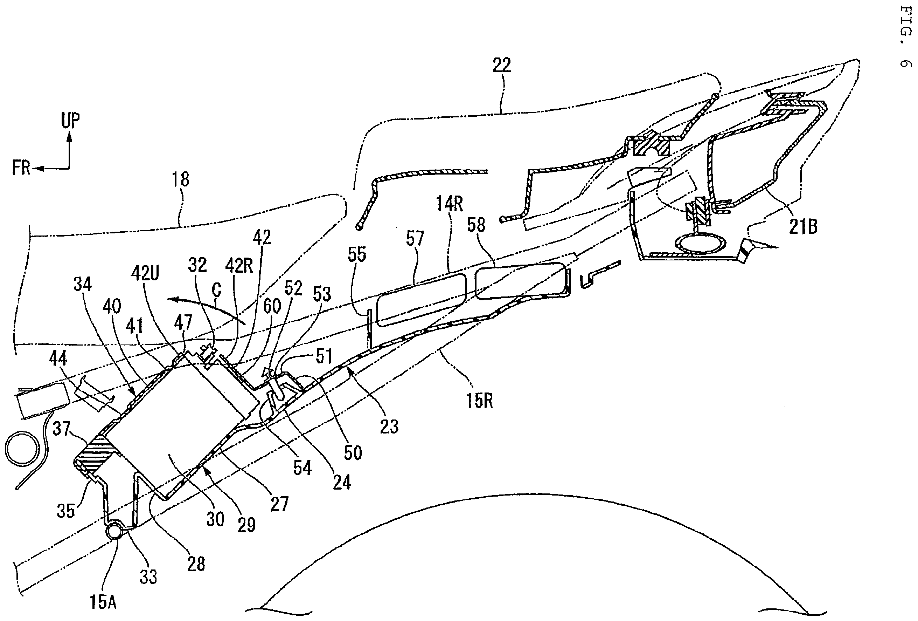

Now refer to Fig. 6. A battery holder portion 29 is formed in a front portion of the rear fender 23. The battery holder portion 29 includes a bottom wall portion 27 in the form of a flat surface and a front sidewall portion 28 bending upward at a front portion of the bottom wall portion 27. The battery 30 is housed in the battery holder portion 29. The battery holder portion 29 is formed integrally with the rear fender 23. The bottom wall portion 27, the front sidewall portion 28, and sidewall portions (not shown) extending upward from two side end portions of the bottom wall portion 27, of the battery holder portion 29 constitute a housing space for the battery 30.

The bottom surface of the battery 30 abuts on the bottom wall portion 27, which extends to be slightly inclined rearward and upward in the battery holder portion 29, and the front surface of the battery 30 abuts on the front sidewall portion 28. The battery 30 is thereby housed in the battery holder portion 29 in a state of being inclined rearward and upward.

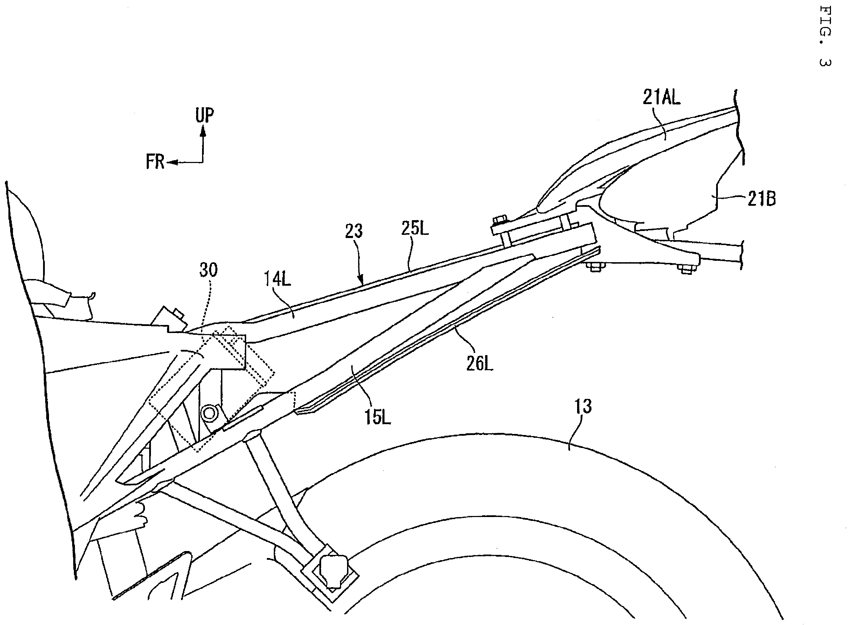

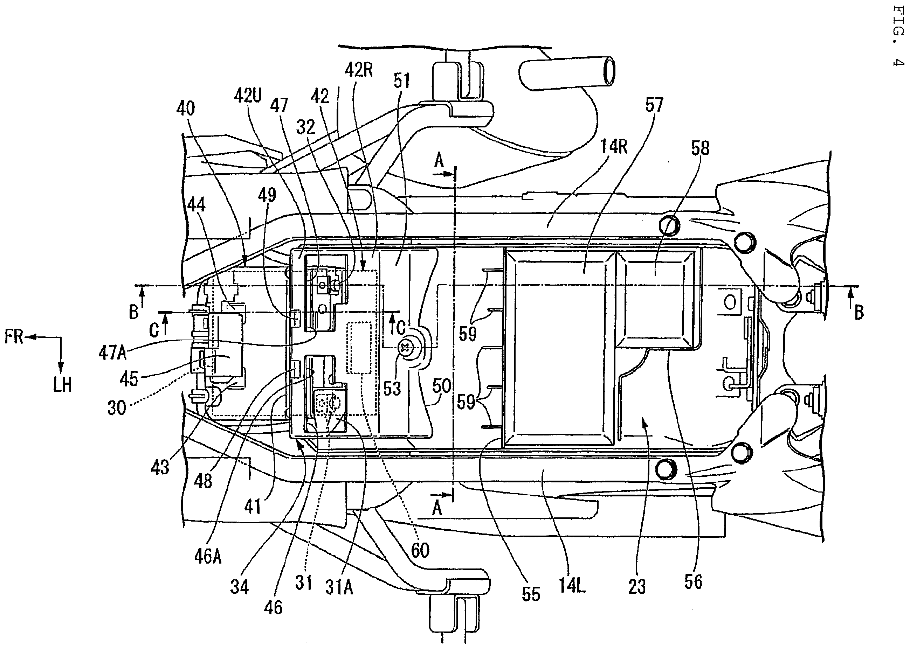

In other words, the battery 30 is arranged at a front portion of the top surface of the rear fender 23, and arranged between the rear frames 14L and 14R and between the rear sub-frames 15L and 15R, as shown in Figs. 2 and 4. Here, an electrode terminal (+) 31 and an electrode terminal (-) 32 of the battery 30 are each directed rearward. Moreover, as shown in Fig. 3, side portions of the battery 30 and side portions of the electrode terminal (+) 31 and electrode terminal (-) 32 are covered by the sidewall portions 25L and 25R of the rear fender 23 which are located lateral to the side portions thereof. Note that, a cover 31A made of a resin material is attached to the electrode terminal (+) 31.

The battery 30 which is housed in the battery holder portion 29 of the rear fender 23 in the aforementioned manner is designed to be covered by a lid member 34 in this embodiment. The lid member 34 serves as a lid for covering an upper portion of the battery holder portion 29 and the battery 30 so as to prevent them from being exposed outside, and also serves to fixedly hold the battery 30. Hereinbelow, the lid member 34 is described in detail.

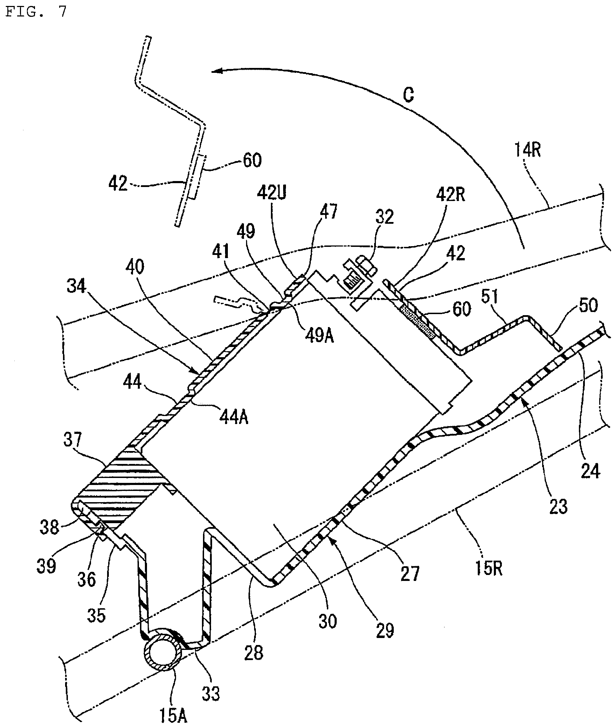

Refer to Figs. 6 and 7 first. A frame abutting portion 33 is formed at an upper portion of the front sidewall portion 28 of the battery holder portion 29 which abuts on the front surface of the battery 30. The frame abutting portion 33 extends substantially downward and abuts on a cross frame 15A bridged between the rear sub-frames 15 and 15. The frame abutting portion 33 constitutes one of support portions for the rear fender 23. An engagement rib 35 for fixing the lid member 34 is formed at a front end portion of the frame abutting portion 33. As shown in an enlarged manner in Fig. 7, the engagement rib 35 extends upward and has an engagement hole 36 formed in its upper portion. The lid member 34 is attached to the battery holder portion 29 by being engaged with and fixed to the engagement rib 35 and the engagement hole 36 from above.

The lid member 34 is made of a resin material for example. The lid member 34 includes: an engagement base 37 constituting a front end portion and engaging with the engagement rib 35; a front half portion 40 located on a front side of the vehicle, formed in a rear portion of the engagement base 37, and covering the top surface and side surfaces of the battery 30; a hinge portion 41 provided in a rear portion of the front half portion 40 and partially including a thinly formed portion; and a rear half portion 42 formed in a rear portion of the hinge portion 41, located on a rear side of the vehicle, covering a rear portion of the top surface of and the rear surface of the battery 30, and rotatable about the hinge portion 41.

The engagement base 37 includes an engagement groove 38 for allowing the engagement rib 35 to be fitted to and engaged with the engagement base 37, and an engagement protrusion 39 protruding from a side surface of the engagement groove 38. The lid member 34 is designed to be engaged with and fixed to the battery holder portion 29 by fitting the engagement groove 38 of the engagement base 37 to the engagement rib 35 from above the engagement rib 35 and by engaging the engagement protrusion 39 with the engagement hole 36.

The front half portion 40 has a cross section in the form of a U shape, and covers the top surface and side surfaces of the battery 30 with its top wall and sidewalls. As referred to in Figs. 2, 4, and 7, recesses 43 and 44 arranged in the vehicle width direction are formed in the top surface of the front half portion 40. The bottom surfaces of the recesses 43 and 44 (i.e., 43A and 44A, of which only 44A extending along the line C-C is shown in Fig. 7) protrude toward the back to abut on the top surface of the battery 30. The recesses 43 and 44 abut on the top surface of the battery 30 to restrict the vertical movement of the battery 30. Thereby, the battery 30 is designed to be held stably by the battery holder portion 29 and the lid member 34. Note that, in place of such recesses 43 and 44, a cushion body made of a resin material may be arranged at the bottom surface of the front half portion 40 in such a way as to abut on the battery 30, for example. In this case also, the battery 30 can be stably held.

Further, as shown in Figs. 2 and 4, a fuse box 45 for housing a fuse is fixed to the top surface of the front half portion 40, which allows the battery 30 and the fuse to be placed adjacent to each other. Accordingly, in a case where a large current not less than a rated current flows from the battery 30, it is possible to quickly break the large current to protect an electrical circuit as long as the fuse housed in the fuse box 45 is connected to the electrode terminal (+) 31 of the battery 30 through fuse wiring not shown.

Now refer to Figs. 6 and 7. The rear half portion 42 is formed of: a top surface covering portion 42U covering a rear portion of the top surface of the battery 30 behind the hinge portion 41; and a rear surface covering portion 42R bending at a rear portion of the top surface covering portion 42U and covering the rear surface of the battery 30.

A fixing wall portion 51 is formed at a lower portion of the rear surface covering portion 42R in such a way as to bend rearward at the lower portion thereof. An abutting portion 50 is formed at a rear end portion of the fixing wall portion 51 in such a way as to extend in the form of an arc along the curve-shaped bottom portion 24 of the rear fender 23 (see Figs. 2 and 4). A clip through hole 52 (see Fig. 6) is formed at a substantial center of the fixing wall portion 51.

A clip 53 is inserted into the clip through hole 52 of the rear surface covering portion 42R. The clip 53 is fastened to a clip engaging portion 54, which is provided integrally with the bottom portion 24 of the rear fender 23, to be insertable and detachable into and from the clip engaging portion 54 with the abutting portion 50 abutting on the bottom portion 24 of the rear fender 23.

With the above structure, the rear half portion 42 is designed to be kept closed by the fastening of the clip 53, and to be allowed to open about the hinge portion 41 in a rotation direction indicated by an arrow C as referred to in Figs. 6 and 7 by releasing the fastening of the clip 53. Note that, the rear half portion 42 in a state of being rotated is shown with a two-dot chain line in Fig. 7. When the rear half portion 42 opens in this manner, the battery 30 can be detached by pulling the battery 30 rearward and upward.

Meanwhile, referring to Figs. 2 and 4, openings 46 and 47 are formed in the rear half portion 42 in its closed state at positions facing the electrode terminal (+) 31 and electrode terminal (-) 32 of the battery 30, respectively. The openings 46 and 47 each open over the top surface covering portion 42U and the rear surface covering portion 42R. Thus, the electrode terminal (+) 31 and electrode terminal (-) 32 directed rearward and upward face the outside through the openings 46 and 47.

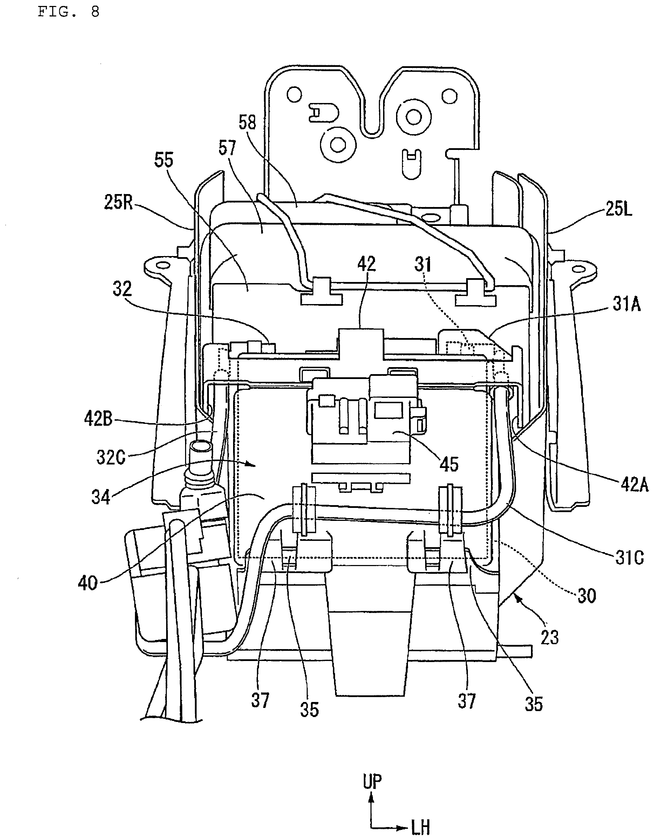

Here, referring also to Fig. 8, a harness 31C for power supply and a harness 32C for grounding, which are respectively connected to the electrode terminal (+) 31 and the electrode terminal (-) 32, are drawn toward the front of the vehicle through openings 42A and 42B for harness which are formed at two end portions of the rear half portion 42. In other words, the openings 46 and 47 in this embodiment are formed not for allowing the harnesses 31C and 32C to be drawn therethrough, but for maintenance, i.e., for allowing the access to the electrode terminal (+) 31 and the electrode terminal (-) 32 without the opening of the rear half portion 42.

The openings 46 and 47 are now described in more detail. The openings 46 and 47 include inward extending portions 46A and 47A, respectively, each extending toward an inner side of the vehicle body, and thus form opening regions each relatively wide in the vehicle width direction. In other words, as shown in Figs. 2 and 4, the openings 46 and 47 with the respective inward extending portions 46A and 47A are formed wide enough not only to allow the electrode terminal (+) 31 and electrode terminal (-) 32 of the battery 30 to face the outside but also to allow peripheral regions of these electrode terminals to face the outside. Accordingly, this embodiment allows the electrode terminal (+) 31, the electrode terminal (-) 32 and their peripheral regions to be exposed sufficiently to the outside without the opening of the lid member 34, thereby enabling the easy connection of wires (a booster cable and the like).

In addition, as referred to in Figs. 2 and 7, recesses 48 and 49 arranged in the vehicle width direction are formed in the top surface covering portion 42U of the rear half portion 42. The bottom surfaces of the recesses 48 and 49 (i.e., 48A and 49A, of which only 49A extending along the line C-C is shown in Fig. 7) protrude toward the back to abut on the top surface of the battery 30. The recesses 48 and 49 abut on the top surface of the battery 30 together with the recesses 43 and 44 formed in the front half portion 40, so that the stable holding of the battery 30 is further secured. Further, an elastic member 60 made of a resin material or the like is fixed to the back surface of the rear surface covering member 42R of the rear half portion 42. The elastic member 60 abuts on the rear surface of the battery 30 to restrict the longitudinal movement of the battery 30 and thereby to hold the battery 30 stably in the battery holder portion 29.

Furthermore, as shown in Figs. 2 and 4, partitioning wall portions 55 and 56 are formed, in this order from the front, behind the battery holder portion 29 of the rear fender 23. The partitioning wall portions 55 and 56 each extend laterally between the sidewall portions 25 and 25. The partitioning wall portions 55 and 56 are formed integrally with the rear fender 23. The partitioning wall portion 55 located at the front extends straight between the sidewall portions 25L and 25R, whereas the partitioning wall portion 56 located at the rear extends straight from the left sidewall portion 25L, and is then cranked and connected to the right sidewall portion 25R.

A space surrounded by the partitioning wall portions 55 and 56 is secured as a housing space, and a rectangular housing box 57 and a square housing box 58 are housed in the housing space. The housing boxes 57 and 58 are each formed in such a way that its top portion is openable and closable, for example, and configured to serve as a housing portion for housing various items. Here, multiple ribs 59 arranged in the vehicle width direction are formed in the rear fender 23. Each of the ribs 59 extends longitudinally and is coupled integrally to the partitioning wall portions 55 and 56. The ribs 59 are formed in such a way that ribs 59 arranged on an inner side in the vehicle width direction have a smaller height. By forming the multiple ribs 59 as above, the housing boxes 57 and 58 are designed to be placed on and fixed to the curve-shaped rear fender 23 in a stable manner.

As has been described thus far, in this embodiment, the openings 46 and 47 are provided to the lid member 34 at positions facing the electrode terminal (+) 31 and electrode terminal (-) 32 of the battery 30, respectively. This allows wires (a booster cable for charging the battery from the outside, and the like) to be connected to the electrode terminal (+) 31 and the electrode terminal (-) 32 without the opening of the lid member 34, thereby enhancing maintenance capabilities. Further, each of the openings 46 and 47 includes the inward extending portion 46A or 47A extending in a direction toward a center of a vehicle body and thus has an inwardly enlarged opening area. This prevents the lid member 34 and a clip of a booster cable from interfering with each other in the connection of the clip from the lateral side, thereby facilitating the connection of the clip from the lateral side.

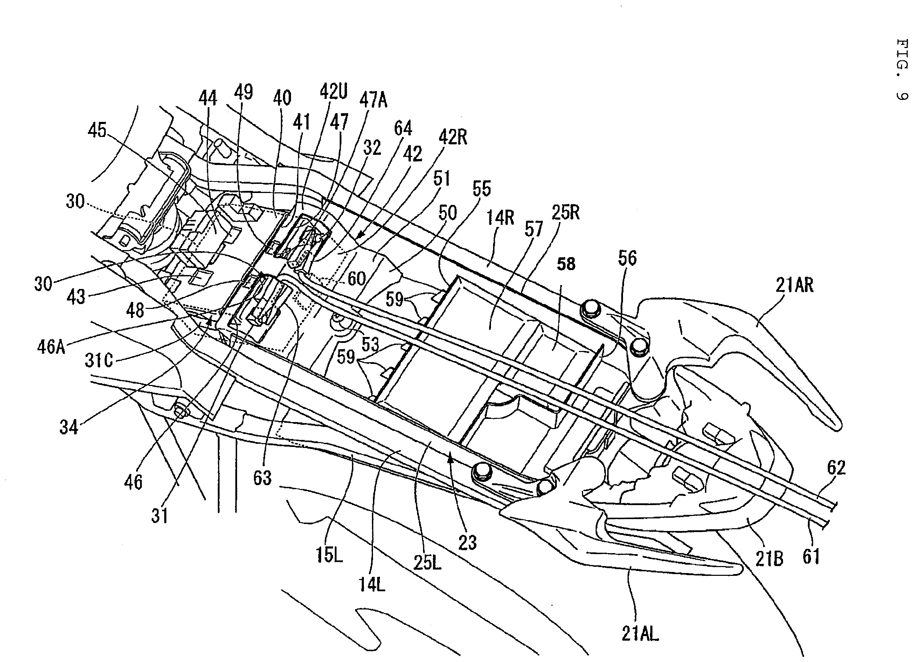

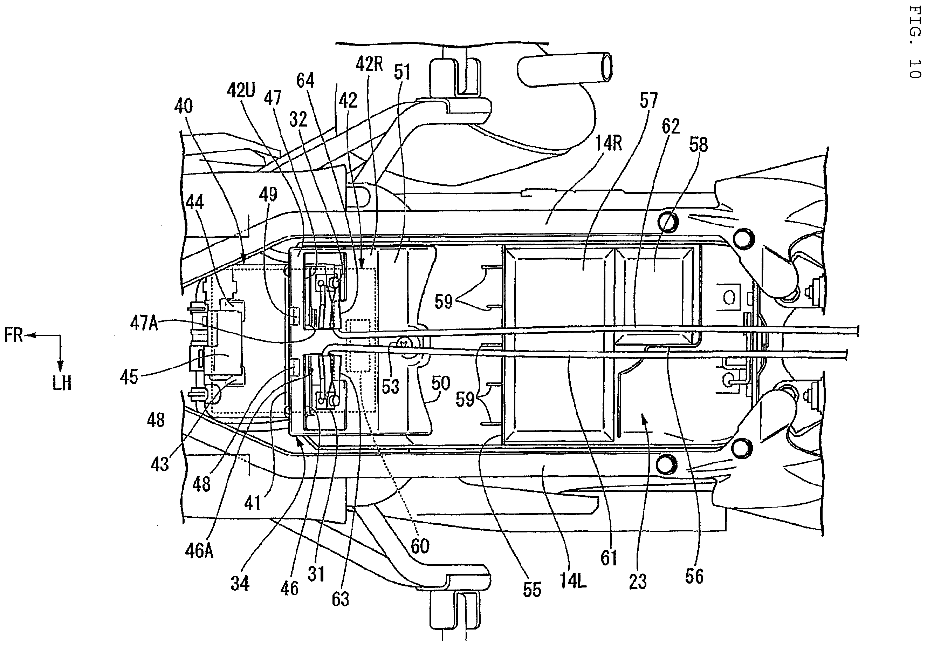

Specifically, in this embodiment, booster cables 61 and 62 can be connected to the respective electrode terminal (+) 31 and electrode terminal (-) 32 without the opening of the lid member 34, as shown in Figs. 9 and 10. This enhances maintenance capabilities. Moreover, each of the openings 46 and 47 includes the inward extending portion 46A or 47A extending in a direction toward a center of a vehicle body and thus has an inwardly enlarged opening area. This prevents the clips 63 and 64 and the lid member 34 from interfering with each other in the connection of the clips 63 and 64 from the lateral side, thereby facilitating the connection of the clips 63 and 64 from the lateral side.

Further, in this embodiment, the battery 30 can be fixedly held in a stable manner by the battery holder portion 29 formed integrally with the rear fender 23 and the lid member 34 without the provision of a dedicated holding band and the like. This reduces the number of components and thus enhances productivity.

Further, the battery 30 is arranged between the paired left and right rear frames 14L and 14R, and the electrode terminal (+) 31 and the electrode terminal (-) 32 are directed rearward. This allows wires to be connected to the electrode terminal (+) 31 and the electrode terminal (-) 32 while the cables extend rearward, and thus prevents the connected wires and the rear frames 14L and 14R from interfering with each other. In addition, as shown in Fig. 3, the sidewall portions 25L and 25R of the rear fender 23 which cover the side portions of the battery 30 are set to extend to a height not lower than that of the top surfaces of the rear frames 14L and 14R. This more reliably prevents wires and the rear frames 14L and 14R from interfering with each other when the wires are connected to the electrode terminal (+) 31 and the electrode terminal (-) 32.

Further, the partitioning wall portions 55 and 56 extending laterally are formed integrally with the rear fender 23 between the sidewall portions 25L and 25R located behind the battery holder portion 29 of the rear fender 23. The space defined by the partitioning wall portions 55 and 56 is used as the housing space, and the housing boxes 57 and 58 are placed in the housing space. This allows placing the housing boxes 57 and 58 without additionally providing a member for placing therein a tool box or component box and thus with reduced cost, thereby making effective use of the rear fender 23. Such an aspect is effective in a small-sized vehicle in which places to attach various components are limited.

Further, the battery holder portion 29 is provided to the rear fender 23, and the lid member 34 is fastened to the rear fender 23 with the clip 53 in such a way as to be openable by pulling out the clip 53 and releasing the fastening thereof. Thereby, the battery holder portion 29 and a portion for fastening the lid member 34 are provided to the rear fender 23. This eliminates the need for additionally preparing members for providing the battery holder portion 29 and a portion for fastening the lid member 34, i.e., allows reducing the number of members, thereby reducing cost.

Further, the lid member 34 is formed of the front half portion 40 located on the front side and the rear half portion 42 located on the rear side. The front half portion 40 is fixed to the battery holder portion 29. The rear half portion 42 is made openable and closable by means of the hinge portion 41, and includes the openings 46 and 47 through which the electrode terminal (+) 31 and the electrode terminal (-) 32 face the outside. Thereby, the battery 30 can be detached by opening the rear half portion 42 only, and without opening the entire lid member 34. This facilitates maintenance work such as replacement of the battery 30, thereby enhancing maintenance capabilities.

Further, the fuse box 45 is provided to the front half portion 40. This allows a fuse to be placed adjacent to the battery 30, and thereby allows, in a case where a large current not less than a rated current flows from the battery 30, quickly breaking the large current to protect an electrical circuit. This also eliminates the need for additionally providing a place to attach the fuse box 45, which is effective in a small-sized vehicle in which places to attach various components are limited. Furthermore, the recesses 43, 44, 48, and 49 are provided in the top surface of the lid member 34, and the bottom portions of the recesses 43, 44, 48, and 49 abut on the battery 30, and the elastic member 60 is provided to the rear half portion 42. This allows suppressing vibration of the battery 30 in the vehicle vertical direction and vibration thereof in the vehicle longitudinal direction due to the drive and the like.

Note that, the configuration shown in the above embodiment is an example of the present invention. It goes without saying that various modifications on configurations, structures, shapes, sizes, the numbers, arrangements of components and the like can be made without departing from the gist of the present invention. For example, in this embodiment, the hinge portion 41 is formed by shaping a resin material to partially include a thinly formed portion, and the front half portion 40 and the rear half portion 42 are formed integrally with each other by means of the hinge portion 41. Alternatively, a separated hinge may be provided to couple the front half portion 40 and the rear half portion 42 with each other.

The description has also been given of the configuration in which the rear half portion 42 is kept closed by fastening the rear half portion 42 to the rear fender 23 with the clip 53. Other configurations may be employed including, for example, a configuration in which the rear half portion 42 is kept closed by an engagement structure where a claw is formed in the rear half portion 42 and an engagement portion for engaging with the claw is provided to the rear fender 23, and a configuration in which the rear half portion is kept closed by bolting. The description has also been given of the configuration in which the battery holder portion 29 is formed integrally with the rear fender 23. Alternatively, an aspect may be employed in which a separated battery holder portion is attached to the rear fender 23.

The invention is directed to provide a peripheral structure of a battery for saddle-ride type vehicle which enhances maintenance capabilities while taking into account a case where other wires are connected to the battery.

In a saddle-ride type vehicle including: a battery 30 for supplying power to electrical components of a vehicle; and a battery holder 29 for housing the battery 30, a lid member 34 is provided to the battery holder 29 to be openable and closable, the lid member 34 fixedly holding the battery 30 in cooperation with the battery holder 29; and the lid member 34 includes openings 46 and 47 at a position facing a positive side terminal 31 and a negative side terminal 32 of the battery 30. This allows booster cables and the like to be connected to the positive side terminal 31 and the negative side terminal 32 without the opening of the lid member 34, thereby enhancing maintenance capabilities.

## Claims

1. A peripheral structure of a battery (30) for saddle-ride type vehicle including: a battery (30) for supplying power to electrical components of a vehicle (1); and a battery holder (29) for housing the battery (30), wherein
a lid member (34) is provided to the battery holder (29) to be openable and closable, the lid member (34) fixedly holding the battery (30) in cooperation with the battery holder (29),
**characterized in that**
openings (46, 47) are formed in the lid member (34) at positions facing a positive side terminal (31) and a negative side terminal (32) of the battery (30), respectively, and
each of the openings (46, 47) includes an inward extending portion (46A, 47A) extending from the opening (46, 47) in a vehicle width direction toward a center of a vehicle body thus forming opening regions each relatively wide in the vehicle width directions.

2. The peripheral structure of a battery (30) for saddle-ride type vehicle according to claim 1, wherein the battery (30) is arranged between paired left and right rear frames (14L, 14R), and
the positive side terminal (31) and the negative side terminal (32) are directed toward a rear of the vehicle (1).

3. The peripheral structure of a battery (30) for saddle-ride type vehicle according to claim 2, wherein
guard members (25L, 25R) which cover lateral sides of the positive side terminal (31) and the negative side terminal (32) are provided at an inner side of the paired left and right rear frames (14L, 14R), and
the guard members (25L, 25R) are set to extend to a height not lower than that of top surfaces of the rear frames (14L, 14R).

4. The peripheral structure of a battery (30) for saddle-ride type vehicle according to claim 3, wherein the guard members (25L, 25R) are formed integrally with a rear fender (23).

5. The peripheral structure of a battery (30) for saddle-ride type vehicle according to claim 4, wherein
a partition (55) extending in a vehicle width direction is formed integrally in the rear fender (23), and
a space defined by the partition (55) is secured as a housing space.

6. The peripheral structure of a battery (30) for saddle-ride type vehicle according to any one of claims 1 to 5, wherein
the battery holder (29) is provided in the rear fender (23), and
the lid member (34) is fastened to the rear fender (23) with a fastening member (53).

7. The peripheral structure of a battery (30) for saddle-ride type vehicle according to any one of claims 1 to 6, wherein
the lid member (34) is formed of a front half portion (40) located on a front side of the vehicle (1) and a rear half portion (42) located on a rear side of the vehicle (1),
the front half portion (40) is fixed to the battery holder (29),
the rear half portion (42) is made openable and closable by means of a hinge (41), and
the openings (46, 47) are provided in the rear half portion (42).

8. The peripheral structure of a battery (30) for saddle-ride type vehicle according to any one of claims 1 to 7, wherein
recesses (43, 44, 48, 49) are provided in a top surface of the lid member (34), and
bottom portions of the recesses (43, 44, 48, 49) abut on the battery (30).

9. The peripheral structure of a battery (30) for saddle-ride type vehicle according to claim 7, wherein an elastic member (60) is provided to the rear half portion (42).

10. The peripheral structure of a battery (30) for saddle-ride type vehicle according to any one of claims 1 to 9, wherein a fuse box (45) for housing a fuse is provided to the lid member (34).

## Patentansprüche

1. Periphere Struktur einer Batterie (30) für ein Fahrzeug vom Sattelfahrtyp, umfassend: eine Batterie (30) zum Zuführen von Energie zu elektrischen Komponenten eines Fahrzeugs (1); und einen Batteriehalter (29) zum Aufnehmen der Batterie (30),
wobei
ein Deckelelement (34) an dem Batteriehalter (29) vorgesehen ist, um öffenbar und schließbar zu sein, wobei das Deckelelement (34) die Batterie (30) in Zusammenwirken mit dem Batteriehalter (29) festhält, **dadurch gekennzeichnet, dass**
Öffnungen (46, 47) in dem Deckelelement (34) an Positionen ausgebildet sind, die jeweils einem positiv-seitigen Anschluss (31) und einem negativ-seitigen Anschluss (32) der Batterie (30) zugewandt sind, und
jede der Öffnungen (46, 47) einen sich einwärts erstreckenden Abschnitt (46A, 47A) umfasst, der sich von der Öffnung (46, 47) in einer Fahrzeugbreitenrichtung zu einer Mitte eines Fahrzeugkörpers hin erstreckt und somit Öffnungsbereiche bildet, die jeweils in den Fahrzeugbreitenrichtungen relativ breit sind.

2. Periphere Struktur einer Batterie (30) für ein Fahrzeug vom Sattelfahrtyp nach Anspruch 1, wobei die Batterie (30) zwischen paarweise vorgesehenen linken und rechten hinteren Rahmen (14L, 14R) angeordnet ist, und
der positiv-seitige Anschluss (31) und der negativ-seitige Anschluss (32) zu einer Rückseite des Fahrzeugs (1) hin gerichtet sind.

3. Periphere Struktur einer Batterie (30) für ein Fahrzeug vom Sattelfahrtyp nach Anspruch 2, wobei
Schutzelemente (25L, 25R), die laterale Seiten des positiv-seitigen Anschlusses (31) und des negativ-seitigen Anschlusses (32) abdecken, an einer Innenseite der paarweise vorgesehenen linken und rechten hinteren Rahmen (14L, 14R) vorgesehen sind, und
die Schutzelemente (25L, 25R) so eingestellt sind, dass sie sich bis zu einer Höhe erstrecken, die nicht niedriger als die der oberen Flächen der hinteren Rahmen (14L, 14R) ist.

4. Periphere Struktur einer Batterie (30) für ein Fahrzeug vom Sattelfahrtyp nach Anspruch 3, wobei die Schutzelemente (25L, 25R) integral mit einem hinteren Kotflügel (23) ausgebildet sind.

5. Periphere Struktur einer Batterie (30) für ein Fahrzeug vom Sattelfahrtyp nach Anspruch 4, wobei
eine Trennwand (55), die sich in einer Fahrzeugbreitenrichtung erstreckt, integral in dem hinteren Kotflügel (23) ausgebildet ist, und ein durch die Trennwand (55) definierter Raum als ein Aufnahmeraum gesichert ist.

6. Periphere Struktur einer Batterie (30) für ein Fahrzeug vom Sattelfahrtyp nach einem der Ansprüche 1 bis 5, wobei
der Batteriehalter (29) in dem hinteren Kotflügel (23) vorgesehen ist, und
das Deckelelement (34) an dem hinteren Kotflügel (23) mit einem Befestigungselement (53) befestigt ist.

7. Periphere Struktur einer Batterie (30) für ein Fahrzeug vom Sattelfahrtyp nach einem der Ansprüche 1 bis 6, wobei
das Deckelelement (34) gebildet ist aus einer vorderen Hälfte (40), die an einer Vorderseite des Fahrzeugs (1) angeordnet ist, und einer hinteren Hälfte (42), die an einer Rückseite des Fahrzeugs (1) angeordnet ist,
die vordere Hälfte (40) an dem Batteriehalter (29) befestigt ist,
die hintere Hälfte (42) mittels eines Scharniers (41) öffenbar und schließbar ist, und
die Öffnungen (46, 47) in der hinteren Hälfte (42) vorgesehen sind.

8. Periphere Struktur einer Batterie (30) für ein Fahrzeug vom Sattelfahrtyp nach einem der Ansprüche 1 bis 7, wobei
Ausnehmungen (43, 44, 48, 49) in einer oberen Fläche des Deckelelements (34) vorgesehen sind, und
Bodenabschnitte der Ausnehmungen (43, 44, 48, 49) an der Batterie (30) anliegen.

9. Periphere Struktur einer Batterie (30) für ein Fahrzeug vom Sattelfahrtyp nach Anspruch 7, wobei ein elastisches Element (60) an der hinteren Hälfte (42) vorgesehen ist.

10. Periphere Struktur einer Batterie (30) für ein Fahrzeug vom Sattelfahrtyp nach einem der Ansprüche 1 bis 9, wobei ein Sicherungskasten (45) zur Aufnahme einer Sicherung an dem Deckelelement (34) vorgesehen ist.

## Revendications

1. Structure périphérique d'une batterie (30) pour un véhicule de type à selle comportant : une batterie (30) pour fournir une alimentation à des composants électriques d'un véhicule (1) ; et un support de batterie (29) pour loger la batterie (30), dans laquelle
un organe couvercle (34) est prévu sur le support de batterie (29) pour pouvoir s'ouvrir et se fermer, l'organe couvercle (34) supportant fixement la batterie (30) en coopération avec le support de batterie (29),
**caractérisée en ce que**
des ouvertures (46, 47) sont formées dans l'organe couvercle (34) à des positions en regard d'une borne côté positif (31) et d'une borne côté négatif (32) de la batterie (30), respectivement, et
chacune des ouvertures (46, 47) comporte une portion d'extension vers l'intérieur (46A, 47A) s'étendant depuis l'ouverture (46, 47) dans le sens de la largeur du véhicule vers un centre d'une caisse de véhicule formant ainsi des régions d'ouverture relativement larges chacune dans les sens de la largeur du véhicule.

2. Structure périphérique d'une batterie (30) pour un véhicule de type à selle selon la revendication 1, dans laquelle la batterie (30) est agencée entre des cadres arrière gauche et droit appariés (14L, 14R), et
la borne côté positif (31) et la borne côté négatif (32) sont dirigées vers l'arrière du véhicule (1).

3. Structure périphérique d'une batterie (30) pour un véhicule de type à selle selon la revendication 2, dans laquelle
des organes de protection (25L, 25R) qui couvrent des côtés latéraux de la borne côté positif (31) et de la borne côté négatif (32) sont prévus au niveau d'un côté intérieur des cadres arrière gauche et droit appariés (14L, 14R), et
les organes de protection (25L, 25R) sont réglés pour s'étendre jusqu'à une hauteur non inférieure à celle de surfaces hautes des cadres arrière (14L, 14R).

4. Structure périphérique d'une batterie (30) pour un véhicule de type à selle selon la revendication 3, dans laquelle les organes de protection (25L, 25R) sont formés d'un seul tenant avec un garde-boue arrière (23).

5. Structure périphérique d'une batterie (30) pour un véhicule de type à selle selon la revendication 4, dans laquelle
une séparation (55) s'étendant dans le sens de la largeur du véhicule est formée d'un seul tenant dans le garde-boue arrière (23), et
un espace défini par la séparation (55) est arrimé en tant qu'espace de logement.

6. Structure périphérique d'une batterie (30) pour un véhicule de type à selle selon l'une quelconque des revendications 1 à 5, dans laquelle
le support de batterie (29) est prévu dans le garde-boue arrière (23), et
l'organe couvercle (34) est attaché au garde-boue arrière (23) avec un organe d'attache (53).

7. Structure périphérique d'une batterie (30) pour un véhicule de type à selle selon l'une quelconque des revendications 1 à 6, dans laquelle
l'organe couvercle (34) est formé d'une demi-portion avant (40) située sur un côté avant du véhicule (1) et d'une demi-portion arrière (42) située sur un côté arrière du véhicule (1),
la demi-portion avant (40) est fixée au support de batterie (29),
la demi-portion arrière (42) est amenée à pouvoir s'ouvrir et se fermer au moyen d'une charnière (41), et
les ouvertures (46, 47) sont prévues dans la demi-portion arrière (42).

8. Structure périphérique d'une batterie (30) pour un véhicule de type à selle selon l'une quelconque des revendications 1 à 7, dans laquelle
des évidements (43, 44, 48, 49) sont prévus dans une surface haute de l'organe couvercle (34), et
des portions basses des évidements (43, 44, 48, 49) butent contre la batterie (30).

9. Structure périphérique d'une batterie (30) pour un véhicule de type à selle selon la revendication 7, dans laquelle un organe élastique (60) est prévu sur la demi-portion arrière (42).

10. Structure périphérique d'une batterie (30) pour un véhicule de type à selle selon l'une quelconque des revendications 1 à 9, dans laquelle un boîtier à fusibles (45) pour loger un fusible est prévu sur l'organe couvercle (34).
